(19) Europäisches Patentamt
European Patent Office
Office européen des brevets

(11) **EP 4 370 957 B1**

(12) **EUROPEAN PATENT SPECIFICATION**

(45) Date of publication and mention
of the grant of the patent:
**18.06.2025 Bulletin 2025/25**

(21) Application number: **22750697.9**

(22) Date of filing: **12.07.2022**

(51) International Patent Classification (IPC):
**G02B 6/10** *(2006.01)*    **G02B 6/12** *(2006.01)*
**G02B 6/122** *(2006.01)*    **G02B 6/126** *(2006.01)*
**G02B 6/13** *(2006.01)*    **G02B 6/136** *(2006.01)*
**G02B 6/27** *(2006.01)*    **G02F 1/01** *(2006.01)*

(52) Cooperative Patent Classification (CPC):
**G02B 6/12002; G02B 6/122; G02B 6/126;**
G02B 6/131; G02B 6/136; G02B 6/274;
G02B 6/2766; G02B 2006/12092;
G02B 2006/12116; G02B 2006/12173;
G02B 2006/12176; G02B 2006/12178; G02F 1/011;
G02F 1/017

(86) International application number:
**PCT/EP2022/069363**

(87) International publication number:
**WO 2023/285406 (19.01.2023 Gazette 2023/03)**

(54) **LIGHT POLARISATION CONVERTER AND METHOD OF MANUFACTURE**

LICHTPOLARISATIONSWANDLER UND VERFAHREN ZU SEINER HERSTELLUNG

CONVERTISSEUR DE POLARISATION DE LUMIÈRE ET PROCÉDÉ DE FABRICATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **16.07.2021 GB 202110288**
**31.12.2021 GB 202119139**

(43) Date of publication of application:
**22.05.2024 Bulletin 2024/21**

(73) Proprietor: **SMART Photonics Holding B.V.**
**5656 AE Eindhoven (NL)**

(72) Inventors:
• **NILSEN, Madeleine**
**5656 AE Eindhoven (NL)**
• **MILLÁN-MEJÍA, Alonso Jesús**
**5656 AE Eindhoven (NL)**
• **AUGUSTIN, Ludovicus Marie**
**5656 AE Eindhoven (NL)**

(74) Representative: **EIP**
**Fairfax House**
**15 Fulwood Place**
**London WC1V 6HU (GB)**

(56) References cited:
**JP-A- H1 078 519    JP-A- H11 109 159**

• **HEIDRICH H: "PASSIVE MODE CONVERTER
WITH A PERIODICALLY TILTED INP/GAINASP
RIB WAVEGUIDE", IEEE PHOTONICS
TECHNOLOGY LETTERS, IEEE, USA, vol. 4, no.
1, 1 January 1992 (1992-01-01), pages 34 - 36,
XP000244563, ISSN: 1041-1135, DOI: 10.1109/
68.124867**

## Description

Background

Light polarisation converters can be used in photonic integrated circuits (PICs) to perform various functions. A light polarisation converter may be designed and manufactured for use in a particular application within a PIC. For example, a PIC may comprise a light polarisation converter for a desired conversion of light of a first polarisation to light of a second polarisation. JPH1078519A relates to a semiconductor polarisation rotation element for use in optical information processing and the like.

It is desirable to improve known light polarisation converters.

Brief Description of the Drawings

Figure 1 illustrates schematically a side cross-section of a light polarisation converter of examples, the cross-section taken on a plane perpendicular to the light propagation axis of the light polarisation converter;
Figures 2 and 3 each illustrate schematically a side cross-section of a light polarisation converter of further examples, each cross-section taken on a plane perpendicular to the light propagation axis of the light polarisation converter;
Figure 4 illustrates schematically a first polarisation of light and a second polarisation of light of examples;
Figure 5 illustrates schematically a side cross-section of a light polarisation converter of examples, the cross-section taken on a plane parallel to the light propagation axis of the light polarisation converter;
Figure 6 illustrates schematically the equator plane of a Poincaré sphere;
Figure 7 is a flow diagram illustrating a method of manufacturing a light polarisation converter according to examples;
Figures 8A to 8J each illustrate schematically the first side cross-section of a light polarisation converter, during subsequent stages of a method of manufacture according to examples, each cross-section taken on a plane perpendicular to the light propagation axis of the light polarisation converter;
Figures 9A to 9C each illustrate schematically the first side cross-section of a light polarisation converter, during subsequent stages of a method of manufacture according to further examples, each cross-section taken on a plane perpendicular to the light propagation axis of the light polarisation converter;
Figures 10A to 10F each illustrate schematically the first side cross-section of a light polarisation converter, during subsequent stages of a method of manufacture according to further examples, each cross-section taken on a plane perpendicular to the light propagation axis of the light polarisation converter; and
Figure 11 illustrates schematically a plan view of a photonic integrated circuit according to examples.

Detailed Description

Examples described herein relate to a light polarisation converter for a PIC.

A PIC may be constructed from basic building blocks intended for the construction of the PIC. The basic building blocks include various components, each having a particular function. An example of a basic building block is a waveguide structure. Basic building blocks typically have a particular effect on light incident thereon. The examples described herein relate to a light polarisation converter that can be used as a basic building block for a PIC.

In examples described herein and in accordance with the accompanying claims, a waveguide has: a first waveguide portion offset from a second waveguide portion along two orthogonal axes, with a first thickness of the first waveguide portion different to a second thickness of the first waveguide portion. The combination of these features, in examples, gives a more efficient light polarisation converter than known converters. This could be considered an increased polarisation conversion power per unit length. With such improved efficiency, a footprint (surface area occupied) of the converter on a PIC, a thickness and/or a length may be less than known light polarisation converters. For example, the length of the light polarisation converter is less than 300 micrometres and, for example, with a > 95% polarisation conversion efficiency.

This combination of features also gives a designer of a PIC more design options and freedom to obtain a desired polarisation conversion from a given input light to a desired output light. By differently setting i) an extent of offset between the first and second surfaces, relative to ii) a change of thickness of the first waveguide portion, a designer can set and customise the polarisation conversion characteristics of the converter for a given purpose. Indeed, as will be appreciated in due course, further parameters of the converter can also be tuned, such as the shape and size of a region (not part of the waveguide) between the first and second layers.

Compared with known converters, more control of the angle of light propagation through the polarisation converter (e.g. to increase the rate of conversion between desired polarisation modes) and the birefringence between two hybrid modes in the converter (e.g. to increase birefringence and in turn shorten the length of the converter that is required) can be obtained by setting i) and/ or ii) appropriately.

The light polarisation converter can have greater tolerance to imperfections during fabrication, compared with known converters. This greater tolerance can facilitate a light polarisation converter with an increased operating bandwidth for polarisation conversion compared with known polarisation converters. This is useful in applications where multiple wavelengths of light are used, such as Wavelength division multiplexed (WDM) optical communication systems and light detection and ranging (LiDAR) systems. Further, the extra design freedom described herein can mean that a given performance can be obtained by a so-called single-section polarisation converter with a smaller footprint than known so-called double-section or multi-section light polarisation converters (with two or more polarisation converters respectively).

Examples will now be described in detail, for which it is useful first to elaborate on the function of a polarisation converter. A polarisation converter is a component for an optical system (such as a PIC) which converts light between different polarisations. A suitably configured light polarisation converter can convert between a first linear polarisation of light and a second linear polarisation of light of a different orientation from the first linear polarisation (e.g. to convert horizontally polarised light into vertically polarised light and vice versa). Or in another example, a suitably configured light polarisation converter can convert between linearly polarised light and circular or elliptical polarised light. A light polarisation converter may also be referred to as a light polarisation rotator or a birefringent rotator.

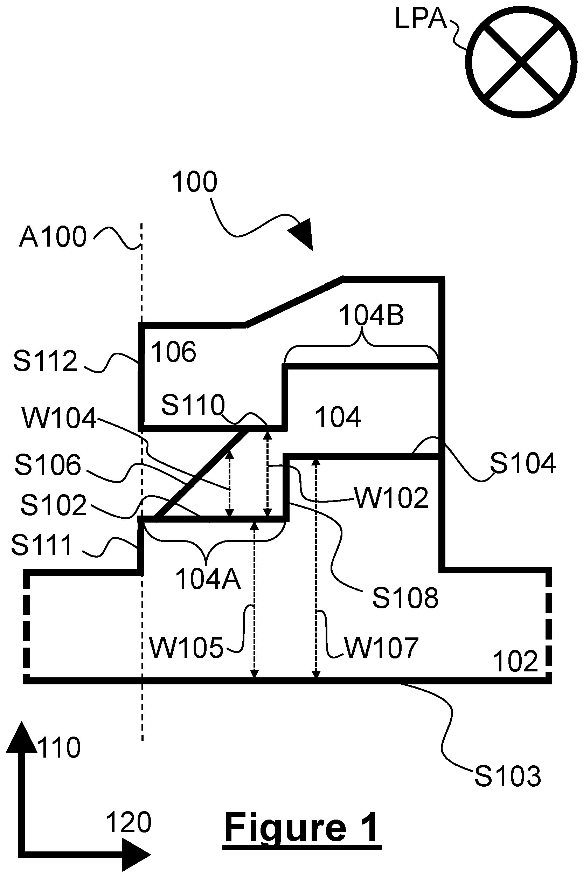

Figure 1 illustrates schematically a side cross-section of a light polarisation converter 100 of first examples. The light polarisation converter 100 is for a PIC. The light polarisation converter 100 comprises a first layer 102 comprising a first surface S102 and a second surface S104. The second surface S104 is offset from the first surface S102 along a first axis 110 and a second axis 120. The first axis 110 is perpendicular to the first surface S102, and the second axis 120 parallel to the first surface S102. The first axis 110 and the second axis 120 are each perpendicular each other and in some examples perpendicular to a light propagation axis LPA of the waveguide 104. The left- and right-most sides of the first layer 102 are illustrated with dashed lines, indicating that the layer may extend laterally beyond the illustration (e.g. as part of a PIC). The first layer 102 can be considered to be a substrate, but in other examples is envisaged as a separate layer on which the so-called first layer is provided or formed, possibly with one or more intermediate layers between the substrate and the first layer.

The light polarisation converter 100 comprises a second layer 106 and a waveguide 104. The waveguide 104 is between and in contact with each of the first layer 102 and the second layer 106. The waveguide 104 comprises: a first waveguide portion 104A in contact with the first surface S102; and a second waveguide portion 104B in contact with the second surface S104. Thus the waveguide 104 is configured with the second waveguide portion 104B offset from the first waveguide portion 104A. A first thickness W102 of the first waveguide portion 104A is different to a second thickness W104 of the first waveguide portion 104. For example the first thickness is greater than the second thickness. The first thickness W102 and the second thickness W104 are parallel each other, and are perpendicular to the first surface S102 and perpendicular the light propagation axis (LPA). Each such thickness can be considered a height.

The first waveguide portion can be considered to be tapered, with the different thicknesses, as viewed in Figure 1. The taper is such that there is a decrease in thickness of the waveguide from one point on the second axis 120 to a second point on the second axis 120. The taper is for example a linear taper, such that the thickness decreases linearly from a larger thickness, such as the first thickness, to a smaller thickness such as the second thickness. The first thickness is e.g. a maximum thickness and the second thickness is e.g. a minimum thickness. The first waveguide portion may therefore decrease in thickness outwards.

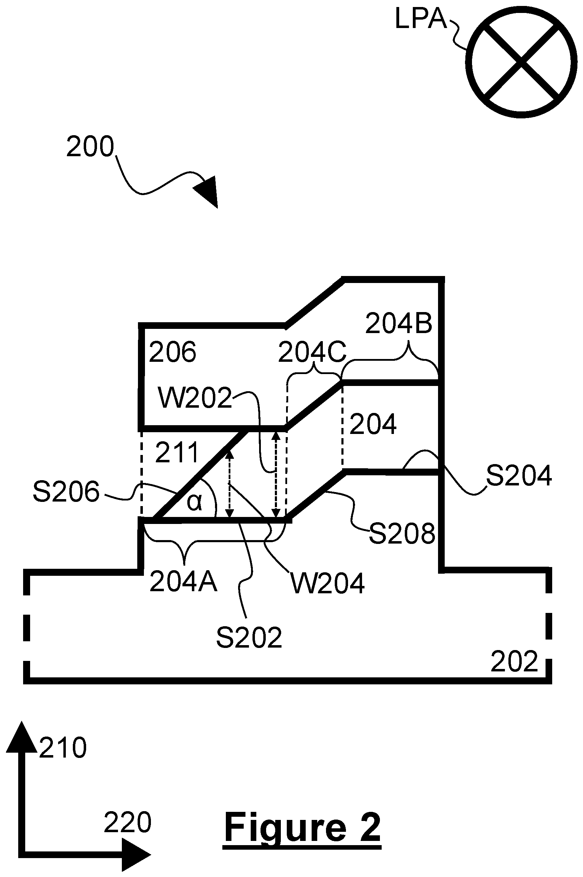

With the first waveguide portion having different thicknesses, an orientation of the first surface can be set in accordance with desired polarisation conversion properties. And as a result of the taper, a third surface S106 of the waveguide 104 can be considered to tilt or slope, for example by an internal (relative to the waveguide) angle α (illustrated in Figure 2) taken relative to the first surface S102 of the waveguide 104. Hence with the third surface S106 being angled in this way, differently from the first surface S102, the third surface is for example non-parallel to the first S102 and second S104 surface.

Related to this, and with the third surface angled as described above, the first portion 104A of the waveguide 104 contacts a first surface S102 of the first layer 102 and the first waveguide portion 104A of the waveguide 104 contacts a first surface S110 of the second layer 106. Thus, the first waveguide portion of the waveguide contacts a larger surface area of the first surface S102 of the first layer than a surface area of the first surface S110 of the second layer 106; in alternative examples the opposite is true.

With the third surface angled in this way, the third surface S106 is for example at least partly recessed from a first plane A100 substantially coplanar (e.g. in the same plane within acceptable tolerances) with a surface S111 of the first layer 104 and a second surface S112 of the second layer 106. The first plane A100 is for example perpendicular the second axis 120 and corresponds with a side of the polarisation converter.

A distance by which the first surface of the waveguide is recessed from the first plane is perpendicular the thickness and may depend on a duration of removing waveguide material, e.g. by a so-called under-etching process.

A fourth surface S108 of the waveguide is in contact with the first layer and is at an angle equal to or greater than 90 degrees, and less than 180 degrees, relative to the first surface S102, the angle being taken internal to the waveguide. The fourth surface S108 can therefore be considered sloped relative to the first surface S102 and/or to the second surface S104. One surface sloped relative to another surface means that there is a non-zero angle between the two surfaces in question. As such, reference can be made to one such surface being at a particular angle relative to the other in the context of one surface being sloped relative to another. In such contexts, reference can also be made to a surface being tilted relative to the other. The terms "tilt", "angle" and "slope" are used interchangeably herein to refer to the angle of an entity relative to another entity or relative to a given axis.

The fourth surface S108 is between the first surface S102 and the second surface S104, meaning, for example, that the fourth surface S108 is interposed between the first surface S102 and the second surface S104, with a side of one surface adjoining a side of another surface. The fourth surface is for example immediately adjacent to each of the first surface S102 and the second surface S104 and can be considered to connect the first surface and the second surface. Thus, the first S102, second S104 and fourth S108 surfaces together can in examples be considered together to constitute the bottom or underside surface of the waveguide 104. In some examples, the second surface S104 is offset from the first surface S102 along at least one of the first axis 110 or the second axis 120 by an amount greater than an extent of the first surface taken along at least one of the first axis 110 or the second axis 120. The offset along at least one of the first axis 110 or the second axis is non-zero but less than a maximum thickness (along the first axis 110 or the second axis respectively) of the first waveguide portion; but in other examples the first axis offset is equal to or greater than the maximum thickness of the first waveguide portion and/or the second axis offset is equal to or greater than the maximum thickness of the first waveguide portion.

An offset in a direction parallel to an axis is relative to a position on that axis where the related entity in question lies. For example, in Figure 1, a side of the first surface S102 corresponds with a position on the first axis 110 and it will be appreciated that a zero offset of the second surface from the first surface S102 along the first axis 110 would mean that each of the first S102 and second S104 surfaces are co-planar with each other and correspond with the same position on the first axis 110. And further, in examples such as those of Figure 1, an offset along the second axis 120 is large enough such that the second surface S104 does not overlap the first surface S102.

With the first surface S102 and the second surface S104 offset as explained above, with appropriate amounts of each offset, and with the different thicknesses of the first waveguide portion, the waveguide 104 can be designed to convert polarisation of light as desired.

The first surface S102 and an opposing surface S103 of the first layer are separated by a first distance W105 and the second surface S104 and the opposing surface S103 of the first layer are separated by a second distance W107, and the second distance is greater than the first distance. In other examples, the first distance is either the same or greater than the second distance. The first distance and the second distance can be considered a height of the bottom of the first portion of the waveguide and the bottom of the second portion of the waveguide respectively, and/or the first distance and the second distance can be considered as thicknesses of the first layer parallel to the first axis at the first surface and the second surface respectively.

As the skilled person will appreciate, particular optical modes of light propagate through the waveguide 104 depending on the desired function and design of the light polarisation converter 100. The direction in which the optical modes propagate within the waveguide 104 is the light propagation axis LPA as referred to herein. The light propagation axis LPA is parallel to the Poynting vector of light propagating in the waveguide and the negative vector of the Poynting vector. In other words, the light propagation axis LPA is parallel to the general direction in which the energy of the optical mode travels through the waveguide 104 and is not necessarily, for example, the direction defined by the angle of incidence at a boundary of the waveguide 104.

Again, as the skilled person will appreciate, the waveguide 104 is for guiding light. In use, light propagates within the waveguide 104 and is confined within the waveguide, for example in two directions, due to reflection at the boundaries of the waveguide 104. The waveguide layer 104 has a refractive index higher than the refractive index of material in contact with the waveguide 104 at the boundaries at which confinement of light is desired. For example, due to this refractive index difference at the boundaries at which confinement of light is desired, total internal reflection takes place when the angle of incidence at these boundaries of the waveguide 104 is greater than the critical angle. For a particular optical mode to propagate in the waveguide 104, it is required that the light reflected at the boundaries of the waveguide 104 is to fulfil the conditions for constructive interference of that particular optical mode, as will be appreciated by the skilled person.

In some examples, the waveguide 104 comprises a material which has a higher refractive index than the material of the first layer and the second layer. For example, the waveguide 104 comprises indium gallium arsenide phosphide (InGaAsP). In some examples, the waveguide 104 comprises (Al)InGaAs(P). The elements indicated in the parentheses are interchangeable and the composition of the different elements is selected depending on the desired function. For example, the composition of Ga and As in InGaAs can be selected according to the desired bandgap. In some examples, the waveguide 104 is a layer of (Al)InGaAs(P). In other examples, the waveguide 104 comprises a plurality of sub-layers. In some such examples, the waveguide 104 comprises a (Al)InGaAs(P)/(Al)InGaAs(P) multiple quantum well structure in contact with the first layer 102. In some examples, the sub-layers are between 5 and 30 nanometres thick. The sub-layer stack of the waveguide 104 has a band gap selected in accordance with the desired application of the light polarisation converter 100. The bandgap and therefore the refractive index of the InGaAsP, for example, can be tuned.

In some examples, the polarisation conversion efficiency of the polarisation converter is set by fabricating the light polarisation converter with a desired ratio of the volume of the first portion 104A of the waveguide to the volume of the second portion 104B of the waveguide. This ratio is, e.g., set by the ratio of the extent of the first surface S102 parallel to the second axis 120 to the extent of the second surface S104 parallel to the second axis 120. Setting the ratio of the volume of the first portion 104A of the waveguide to the volume of the second portion 104B of the waveguide, for example, changes the ratio of the energy that propagates through the first portion 104A of the waveguide to the energy that propagates through the second portion 104B of the waveguide.

Figure 2 illustrates schematically a side cross-section taken on a plane perpendicular the LPA, of a light polarisation converter 200 of further examples. Except where otherwise described below, the features of these examples are in common with those described for Figure 1, and so are not re-described here for conciseness. Where a feature in relation to Figure 2 corresponds with a feature described using Figure 1, a reference numeral is used which is 100 greater than the corresponding reference numeral used for Figure 1 (e.g. 102 in Figure 1 is 202 in Figure 2); corresponding descriptions for such features apply here also.

The first surface S202 is angled relative to the third surface S206 by the internal angle $\alpha$ of 30 to 65 degrees, for example, and depending on a plane of a crystalline material, 30 to 40 degrees, such as approximately (within acceptable manufacturing tolerances) 35 degrees, or 50 to 65 degrees, such as approximately (within acceptable manufacturing tolerances) 55 degrees or 60 degrees, 50 to 55, 55 to 60 or 60 to 65 degrees. In other examples (not shown), the internal angle $\alpha$ is greater than 90 degrees.

Similarly, as described for Figure 1, the fourth surface S208 is also sloped relative to the first surface S202 and/or to the second surface S204. The third surface S206 is, substantially parallel to the fourth surface S208 (e.g. parallel within acceptable manufacturing tolerances) with e.g. the third and fourth surfaces each at 15 degrees to the first surface. In other examples the third surface and the fourth surface are not parallel to each other, e.g. the third surface is at 65 degrees to the first surface and the fourth surface is at 15 degrees to the first surface (and thus 50 degrees to the third surface).

The material of which the waveguide is formed is for example a crystalline material, with the angle $\alpha$ between the first surface S202 and the third surface S206 corresponding with at least one of a {0-11}, {111} or {112} plane of the crystalline material. The {XYZ} notation is in accordance with the Miller index system for indicating a plane or family of planes in a crystal, as will be known to the skilled person. Such a plane may also be referred to as a crystal plane. As will be explained later, by using an appropriate manufacturing method, e.g. with a particular etchant selective for a particular crystal plane of the waveguide material, the angle $\alpha$ between the third surface S206 and the first surface S202 can be simply obtained.

Such an etching approach is selective so as to etch the material of the waveguide without etching (or notably more slowly etching) the material of the first layer 202 and second layer 206. Hence, to form the angle $\alpha$ between the first surface S202 and the third surface S206, waveguide material is removed during the etching from between the first layer 202 and the second layer 206, e.g. from under the second layer 206. In examples there is therefore a region 211 between the first layer 202 and second layer 206 where the waveguide 204 is not present. In other words the waveguide 204 is absent from the region 211, or the refractive index of the region 211 is sufficiently different from the refractive index of the waveguide 204 such that light is confined within the waveguide.

In examples, such as those of Figure 2, the waveguide 204 has a third waveguide portion 204C (otherwise referred to herein as an intermediate portion) in contact with the fourth surface S208 and between the first waveguide portion 204A and the second waveguide portion 204B. The first layer 202 with surfaces offset as described, and the fourth surface S208 sloped with a non-90 degrees angle relative to the first surface, is at least partly formed before the waveguide 204 is formed on top of the first layer 202. The sloped fourth surface S208 results in a corresponding slope of the third waveguide portion. Thus, the first waveguide portion 204A, the second waveguide portion 204B and the third waveguide portion 204C can be considered together to constitute the waveguide 204.

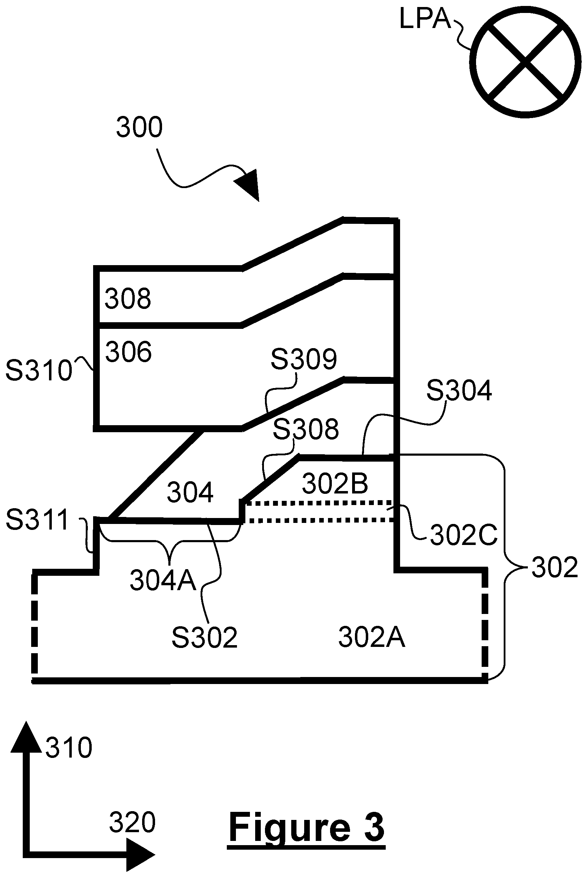

Figure 3 illustrates schematically a side cross-section taken on a plane perpendicular the LPA, of a light polarisation converter 300 according to further examples. Except where otherwise described below, the features of these examples are in common with those described for Figure 1, and so are not re-described here for conciseness. Where a feature in relation to Figure 3 corresponds with a feature described using Figure 1, a reference numeral is used which is 200 greater than the corresponding reference numeral used for Figure 1 (e.g. 102 in Figure 1 is 302 in Figure 3); corresponding descriptions for such features apply here also.

In examples, such as those of Figure 3, a first portion 302A of the first layer 302 comprises the first surface S302, and a second portion 302B of the first layer 302 comprises the second surface S304. The first portion of the first layer 302 comprises (e.g. is formed of) a different material from a material of the second portion 302B of the first layer 302. The first and second portions are illustrated in Figure 3 using horizontal dashed lines, as also is a third portion 302C of the first layer between and in contact with the first and second portions 302A, 302B of the first layer. Each of the first, second and third portions can be considered sub-layers of the first layer with the third portion 302C formed of a different material from at least one of the first portion 302A or the second portion 302B.

A different material, relative to another material, is, for example, at least one of a different crystalline structure, a different alloy, a different isomer, a different isotope, a mixture of different proportions, or having different material properties, such as refractive index, different susceptibility to etching by a particular etchant, different crystalline structures, different crystalline plane orientations, and/or electrical conductivity, though other examples of a different material are envisaged. A different material relative to another material is therefore not the same material, even though each material may comprise the same chemical elements as each other without either material having more elements than the other. Two different materials may however have different proportions of the same elements relative to each other (e.g. with one material having more dopant than another). At least one of the second portion of the first layer or the third portion of the first layer is, for example, an etch stop to aid the formation of the first layer.

In some examples, such as those of Figure 3, at least one surface of the second layer in contact with the waveguide is not parallel to an opposing surface of the first layer also in contact with the waveguide. For example, a surface S309 of the second layer 306 is not parallel to the fourth surface S308 of the first layer 302.

In some examples, the light polarisation converter 300 comprises a third layer 308. The third layer is on and in contact with the second layer 306. The third layer is, for example, an electrode, an insulator or a dielectric.

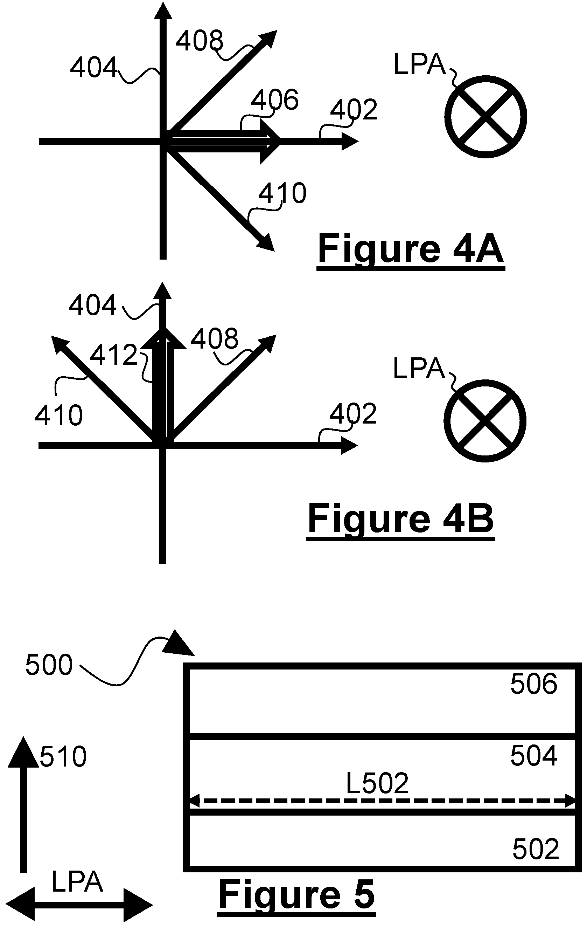

Referring now to Figures 4A and 4B, a function of the waveguide 104, 204, or 304 for conversion of the polarisation of light will now be described. Figure 4A relates to input light and Figure 4B relates to output light. Note that this is in the context of linearly polarised light incident on the light polarisation converter 100 200 or 300. Figures 4A and 4B illustrate a transverse electric (TE) polarisation axis 402 and a transverse magnetic (TM) polarisation axis 404. The light propagation axis LPA is, in Figures 4A and 4B, into the page (perpendicular to both the TE polarisation axis 402 and the TM polarisation axis 404). With respect to Figures 1, 2 or 3, the TM polarisation axis 404 is parallel to the first axis 110, 210 or 310, and the TE polarisation axis 402 is parallel to the second axis 120, 220, or 320.

For linearly polarised light, the direction of the electric field of light propagating as indicated by the symbol LPA can be indicated with respect to the TE polarisation axis 402 and the TM polarisation axis 404. The arrow 406 indicates linearly polarised light that is TE polarised.

The waveguide 104, 204, 304 having a first waveguide portion 104A, 204A, 304A offset from a second waveguide portion 104B, 204B, 304B, and a first thickness W102, W202, W302 of the first waveguide portion different to a second thickness W104, W204, W304 of the first waveguide portion, causes there to be hybrid modes within the waveguide. This arrangement of the waveguide is a "tilted" or sloped boundary condition for the light propagating within the waveguide for the hybrid modes.

The tilted boundary condition causes there to be a first hybrid mode which has an electric field tilted with respect to the TE axis because of the geometry of the waveguide. The first hybrid mode occupies the first waveguide portion, the second waveguide portion, and, in some examples, the third waveguide portion. The terms "tilt", "angle" and "slope" are used interchangeably herein to refer to the angle of the first hybrid mode relative to the TE axis. There is also a second hybrid mode orthogonal to the first hybrid mode. A hybrid mode, as referred to herein, is a mode of light which has an electric field with a non-zero component along the TE polarisation axis and a non-zero component along the TM polarisation axis.

Figures 4A and 4B show a first hybrid mode 408 and a second hybrid mode 410. The first and second hybrid modes 408, 410 illustrate an example of hybrid modes that may exist within the waveguide when light is propagating therethrough. In this example, the first and second hybrid modes 408, 410 arise from light with TE polarisation (with the electric field along the TE polarisation axis 402), as shown by arrow 406, incident on the light polarisation converter for propagation through the waveguide.

The tilt angle (relative to the TE axis 402) for the first hybrid mode 408 is assumed to be 45 degrees. Such a tilt angle for the first hybrid mode 408 arises as a result of the arrangement of the waveguide, for example. In these examples, the angle with respect to the TE axis 402 of the second hybrid mode 410 is also 45 degrees and the first and second modes 408, 410 have electric fields with equal magnitude. Those skilled in the art will appreciate that the first and second modes 408, 410, with the tilt angle of 45 degrees and the phase relationship shown in Figure 4A, have equal and opposite components along the TM polarisation axis 404 and in combination correspond to TE polarised light.

Furthermore, the described arrangement of the waveguide has a different propagation constant for the first and second hybrid modes 408, 410. The arrangement results in birefringence such that the first and second hybrid modes 408, 410 experience different effective refractive indices to one another when propagating within the waveguide. This means that the phase difference between the first and second hybrid modes 408, 410 changes as the first and second hybrid modes 408, 410 propagate. In other words, the phases of the first and second modes 408, 410 evolve differently as the first and second modes 408, 410 propagate within the waveguide. The presence of the hybrid modes and their different propagation constants means that the arrangement of the waveguide can be used to convert the polarisation of light input into the light polarisation converter. The way in which polarisation is converted is described in further detail below.

Figure 5 illustrates schematically a second side cross-section taken on a plane parallel the LPA, of a light polarisation converter 500 according to examples similar to those examples described above with Figures 1 to 3. Except where otherwise described below, the features of the examples described using Figure 5 are in common with those described for Figure 1, and so are not re-described here for conciseness. Such features are referred to using reference numerals 400 greater than those used for Figure 1. Corresponding descriptions for such features apply here also.

The waveguide 504 has a length L502 as shown in Figure 5. The light propagation axis is indicated by arrow LPA. The light polarisation converter is for converting between a first polarisation of a given wavelength of light and a second polarisation of the given wavelength of light. The first polarisation and the second polarisation are each, e.g., a linear polarisation, elliptical polarisation or a circular polarisation. In some such examples, a length of the waveguide L502 in the light propagation axis LPA is substantially equal (e.g. equal within acceptable tolerances) to an odd integer multiplied by half of a beat length for the given wavelength of light.

A length L502 of the waveguide 504 for the phase of the modes of light propagating therein to be restored is referred to as the beat length. For example, if the first and second modes start their propagation within the waveguide 504 in phase, the modes will be back in phase after propagating an integer multiple of the beat length within the waveguide 504. By selecting the waveguide length L502 in the light polarisation converter 500 based on the beat length, the relative phase of the modes of light propagating therein can be controlled for light output from the light polarisation converter 500.

As discussed above, the described arrangement of the waveguide 504 causes a different propagation constant for the first and second hybrid modes. The described arrangement of the waveguide 504 (with portions offset in a direction parallel to the first axis 510), causes there to be birefringence in that the first and second hybrid modes experience a different effective refractive index to one another. The propagation constant of the first hybrid mode in the waveguide 504 can be represented by $\beta_1$ and the propagation constant of the second hybrid mode can be represented by $\beta_2$. The difference in these propagation constants can be represented as $\Delta\beta = \beta_1 - \beta_2$. Equation 1 below shows the beat length $L_\lambda$ for the waveguide 504 for the first and second hybrid modes. Those skilled in the art will appreciate that $\beta$ represents phase propagation. In Equation (1) below, $\lambda$ is the given wavelength and $\Delta n$ represents the difference in the effective refractive indices of the first and second hybrid modes: $\Delta n = n_1 - n_2$.

$$L_\lambda = \frac{2\pi}{\Delta\beta} = \frac{\lambda}{\Delta n} \qquad (1)$$

In some examples, the beat length is affected by the thickness of the waveguide and/or the cladding of the waveguide. In some examples, the waveguide is curved, and consequently the light propagation axis is curved, and the beat length is taken along a curve.

An effective refractive index of a waveguide is a dimensionless number that describes how fast light travels through a waveguide and how light attenuates through the waveguide. A refractive index of a material is a dimensionless number that describes a phase velocity of a light wave in the material and how light attenuates through the material. Effective refractive index and refractive index are commonly expressed as a complex number; however, herein only the real component of refractive index is considered. The real component of a refractive index is the speed of light in vacuum divided by the phase velocity of the light wave in the material. In some examples, effective refractive index and/or refractive index is dependent on the wavelength of the light being considered. Herein when a comparison is made between two effective refractive indices or between to two refractive indices, the comparison is between the real components for the same wavelength of light.

In some examples, the light polarisation converter is for rotating the linear polarisation of the given wavelength of light. As described above, in some such examples, the waveguide length is substantially (within acceptable tolerances) equal to an odd integer multiplied by half of the beat length. This is the case in examples in which the tilt angle of the first mode is 45 degrees relative to the TE axis. Factors determining the tilt are described further below. In other words, the waveguide length can be 1/2 of the beat length, 3/2 of the beat length, 5/2 of the length and so on, as indicated by Equation 2 below. In Equation 2, m represents an odd integer such as 1, 3, 5, 7, 9, etc.

$$\text{Waveguide Length} = m\frac{\pi}{\Delta\beta} \qquad (2)$$

This means that the relative phase of the first and second modes after propagating through the waveguide is shifted by $\pi$ radians. Those skilled in the art will appreciate that when TE polarised light as indicated by the arrow 406 is incident on the waveguide 504, and the first and second modes 408, 410 arise at the beginning of the waveguide 504, the first and second modes 408, 410 will be in phase with one another. In other words, after propagating through the waveguide 504 with a waveguide length of 1/2 the beat length (or 3/2 the beat length, or 5/2 of the beat length, etc.) the first and second modes 408, 410 are out of phase with each other by 180 degrees.

Figure 4B illustrates the TE and TM polarisation axes 402, 404 shown in Figure 4A. Figure 4B relates to examples where linear TE polarised light is incident on the waveguide 504 as indicated by Figure 4A, and the tilt angle of the first hybrid mode 408 relative to the TE axis 402 is 45 degrees. Figure 4B illustrates the first and second modes 408, 410 after having propagated through the waveguide 504 in the direction indicated by the symbol LPA for an integer multiple of half the beat length. Those skilled in the art will appreciate that the electric field for light oscillates between opposing quadrants of the space indicated by the TE and TM polarisation axes 402, 404. Accordingly, in comparison to the state shown in Figure 4A, in Figure 4B, the first mode 408 has completed an integer multiple of its electric field oscillations, whereas the second mode 410 has completed an odd integer multiple of half of its electric field oscillation (to end up in the top left quadrant).

Those skilled in the art will appreciate that the first and second modes 408, 410 with the phase relationship shown in Figure 4B have equal and opposite components along the TE polarisation axis 402. The first and second modes 408, 410 with the phase relationship shown in Figure 4B would have TM polarised light as indicated by the arrow 412, if the first and second modes 408, 410 exit the waveguide 104, 204, 304 with the phase relationship shown in Figure 4B. In other words, if the phases of the first and second modes 408, 410 no longer evolve differently from the point shown in Figure 4B, the result is TM polarised light. It should be noted in the examples of Figure 4B, the first and second modes 408, 410 have a 45 degree angle relative to the TM axis 404.

In these examples, where the first hybrid mode 408 has a 45 degree angle relative to the TE axis 402, by selecting the waveguide length to be an odd integer multiplied by half of the beat length, linear polarisation of the given wavelength of light can be rotated as described above. For example, a first linear polarisation (TE polarisation in the above examples) can be converted to a second linear polarisation (TM polarisation in the above examples).

The above examples are in the context of the first hybrid mode 408 having a 45 degree tilt relative to the TE axis 402. In some examples, the arrangement of the first layer 102, 202, 302 and the waveguide 104, 204, 304 is such that when hybrid modes arise within the waveguide, the first hybrid mode 408 (e.g. the hybrid mode substantially aligned with the intermediate waveguide portion 128) does not have a 45 degree angle relative to the TE axis 402. Factors influencing the tilt of the first hybrid mode are discussed further below. In such examples, a 90 degree rotation of polarisation (e.g. from TE polarisation to TM polarisation) does not take place upon propagating through a length (corresponding with L502) equal to an odd integer multiplied by half of the beat length.

A series of two or more light polarisation converters as described herein (for example, each with a different tilt angle and/or length along their respective LPA) can be used to obtain a desired polarisation conversion. In some examples, for a light polarisation converter (e.g. the light polarisation converter 100, 200, 300), a length (along the LPA and corresponding with L502) of the waveguide is equal to an odd integer multiplied by a quarter of the beat length. A pair of such light polarisation converters in series can be used where the tilt of one or both converters is not 45 degrees, or in other examples is 45 degrees, in order to obtain a 90 degree linear polarisation rotation, as described in the following. A first light polarisation converter (e.g. of Figures 1, 2 or 3) of the pair has a length of the waveguide along the LPA axis which achieves 90 degree ($\pi/2$ radians) phase difference between the first and second hybrid modes. This means that the length (corresponding to L502) can be 1/4 of the beat length, 5/4 of the beat length, 9/4 of the beat length and so on. A second light polarisation converter (e.g. of Figures 1, 2, or 3) of the pair has a length (along the LPA and corresponding with L502) of the waveguide which achieves a 270 degree (3/2 $\pi$ radians) phase difference between the first and the second hybrid modes. This means that the length of the waveguide in the second light polarisation converter can be 3/4 of the beat length, 7/4 of the beat length, 11/4 of the beat length and so on.

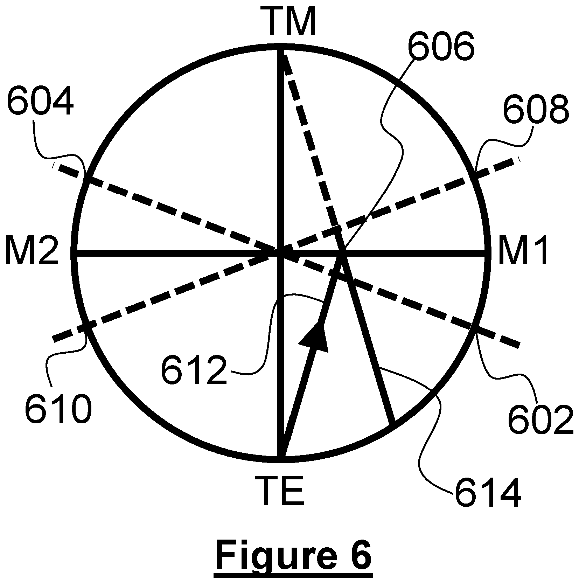

Figure 6 is a sketch of the equator plane of the Poincaré sphere. Those skilled in the art will appreciate that all polarisation states can be mapped onto the surface of the so-called Poincaré sphere. Points lying on the equator of the Poincaré sphere represent all angles of linear polarisation. The poles of the Poincaré sphere represent clockwise and anticlockwise circular polarisations. The points corresponding to TE polarisation and TM polarisation can be seen in Figure 6.

Points corresponding to the first and second hybrid modes lie on the equator of the Poincaré sphere. The position of the hybrid modes on the equator depends on the tilt, in other words the angle, of the first hybrid mode relative to the TE axis.

In the case of the first hybrid mode having a 45 degree angle relative to the TE axis, the first hybrid mode corresponds to point M1 and the second hybrid mode corresponds to the point M2. An axis crossing M1 and M2 is perpendicular to an axis crossing the TE and TM polarisation points on the equator of the Poincaré sphere. Propagation of the hybrid modes through the waveguide, where their phases evolve differently from one another, corresponds to rotation of a point that represents the polarisation when the hybrid modes recombine, about the axis crossing M1 and M2. A 180 degree rotation about an axis crossing M1 and M2 leads to e.g. polarisation conversion from TE polarisation to TM polarisation.

In the case of the first hybrid mode having an acute angle different to 45 degrees relative to the TE axis, points corresponding to the first and second hybrid modes are not points M1 and M2. In some examples, the first hybrid mode corresponds to point 602 and the second hybrid mode corresponds to point 604. In these examples, a 180 degree rotation about an axis crossing points 602 and 604 does not arrive at the TM polarisation point. As described above, when the tilt angle is different to 45 degrees, a 180 degree phase difference between the first and second hybrid modes does not provide a 90 degree rotation of linear polarisation.

However, a 90 degree rotation about the axis crossing points 602 and 604 arrives at point 606. Point 606 is a point on the surface of the Poincaré sphere above the page of Figure 6. In some examples, the first light polarisation converter is used to obtain a polarisation corresponding to point 606 on the Poincaré sphere. In these examples, a first light polarisation converter in accordance with examples described herein provides hybrid modes that have polarisations corresponding to points 602 and 604. In other words, the first polarisation converter provides a tilt such that the hybrid modes have polarisations corresponding to points 602 and 604.

A second polarisation converter in accordance with examples described herein, and in series with the first polarisation converter, provides a tilt in the opposite direction such that the hybrid modes in the second polarisation converter correspond to points 608 and 610. This can be achieved by the second polarisation converter having a side cross-section (corresponding to the side cross-section shown in Figure 1) which is the mirror image of the side cross-section (corresponding to the side cross-section shown in Figure 1) of the first polarisation converter.

An axis crossing points 608 and 610 is a mirror image of the axis crossing points 602 and 604, relative to the axis crossing points M1 and M2. Line 612 represent a trajectory from the TE point to point 606 after a 90 degree rotation about the axis crossing points 602 and 604. It should be noted that line 612 is a straight line projection of the trajectory on the Poincaré sphere which would follow the surface of the Poincaré sphere.

A rotation about the axis crossing points 608 and 610 including the point 606 traces a circle on the surface of the Poincaré sphere which crosses the TM point. A rotation in the opposite direction from point 606 and about the axis crossing points 608 and 610 can be used to arrive at the TM point. The second polarisation converter having a mirrored side-cross section for rotation relative to the Poincaré sphere in the opposite direction to the first polarisation converter. Line 614 represents a straight line projection of a trajectory starting from point 606, corresponding to rotation about the axis crossing points 608 and 610 in the opposite direction to the described 90 degree rotation to arrive at point 606. The trajectory 614 crosses the TM point after a 270 degree rotation about the axis crossing points 608 and 610.

In this manner, even in examples where the tilt of the first hybrid mode is not 45 degrees, a 90 degree rotation of the linear polarisation can be achieved by propagation light through the first light polarisation converter and then the second light polarisation converter.

In some examples, the light polarisation converter is for converting between linear and circular polarisation of the given wavelength of light. In such examples, the waveguide length is substantially (within acceptable tolerances) equal to an odd integer multiplied by a quarter of the beat length. In such examples, the tilt of the first hybrid mode is 45 degrees relative to the TE axis 402. The waveguide length according to such examples is represented by Equation 3 below.

$$\text{Waveguide Length} = m\frac{\pi}{2\Delta\beta} \qquad (3)$$

The first and second hybrid modes propagating in the waveguide for an odd integer multiple of a quarter of the beat length would result in a phase different of $1/2\,\pi$ radians (or 90 degrees). Those skilled in the art will appreciate that introducing a phase difference of 90 degrees about the axis crossing points M1 and M2 is for conversion between linear and circular polarisations. Taking the example of linearly polarised light in the horizontal direction as indicated in Figure 4A incident on the waveguide, the light polarisation converter with a waveguide length (e.g. corresponding to L502) according to Equation 3 would convert the TE polarised light into circularly polarised light. In examples where circularly polarised light is incident on the light polarisation converter for converting between linear and circular polarisations, the circularly polarised light would be converted into linearly polarised light.

How a light polarisation converter described in examples herein is manufactured will now be described. Broadly, such a method comprises at least partly forming the first layer described earlier, at least partly forming the waveguide described earlier on and in contact with the first layer, and at least partly forming the second layer described earlier on and in contact with the waveguide.

In some examples at least one of the first layer, the waveguide or the second layer feature are formed using a respective precursor structure, such as a precursor layer which is first formed or deposited, then further processed (e.g. by etching) to shape or otherwise produce the desired structure for the polarisation converter being manufactured. Examples are now described using such a precursor.

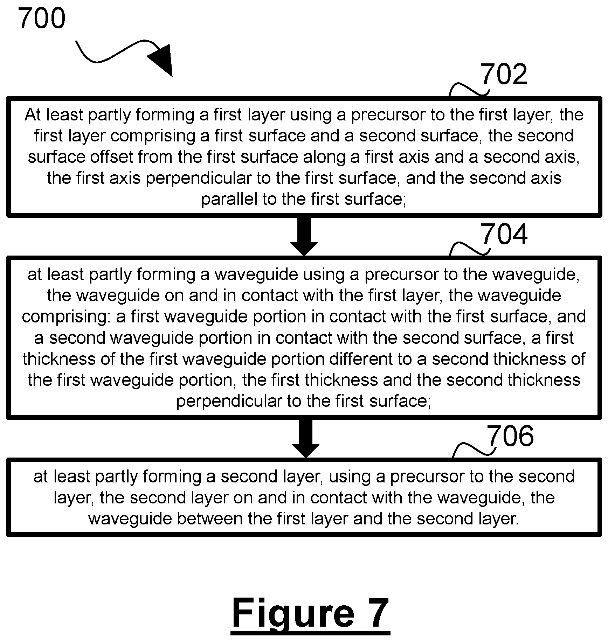

Figure 7 is now referred to describe such a method. A method 700 of manufacturing a light polarisation converter comprises at least partly forming 702 a first layer using a precursor to the first layer. As explained for earlier examples, the first layer comprises a first surface and a second surface, the second surface is offset from the first surface along a first axis and a second axis, the first axis is perpendicular to the first surface, and the second axis is parallel to the first surface. The method 700 further comprises at least partly forming 704 a waveguide using a precursor to the waveguide. The waveguide is on the first layer and comprises, as explained previously, a first waveguide portion in contact with the first surface, and a second waveguide portion in contact with the second surface. A first thickness of the first waveguide portion is different to a second thickness of the first waveguide portion. The first thickness and the second thickness are perpendicular to the first surface. The method 700 further comprises at least partly forming 706 a second layer, using a precursor to the second layer. As for examples described previously, the second layer is on and in contact with the waveguide, the waveguide between the first layer and the second layer.

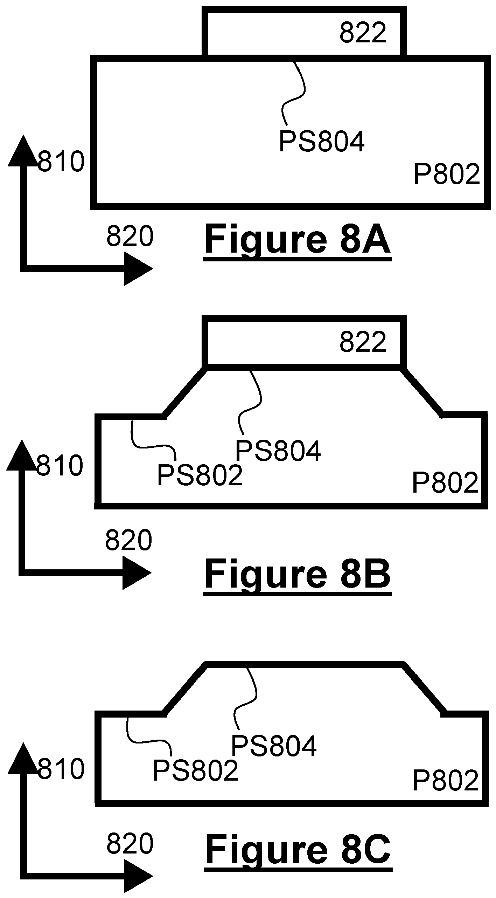

Such a manufacturing method will now be described in further detail using Figures 8A to 8J which each illustrate schematically the first side cross-section of a light polarisation converter 800 at subsequent stages during a method of manufacture. Except where otherwise described below, features of Figures 8A to 8J are in common with those described for Figure 1, and so are not re-described here for conciseness. Where a feature in relation to any of Figures 8A to 8J corresponds with a feature described using Figure 1, a reference numeral is used which is 700 greater than the corresponding reference numeral used for Figure 1 (e.g. 102 in Figure 1 is 702 in any of Figures 8A to 8J); corresponding descriptions for such features apply here also.

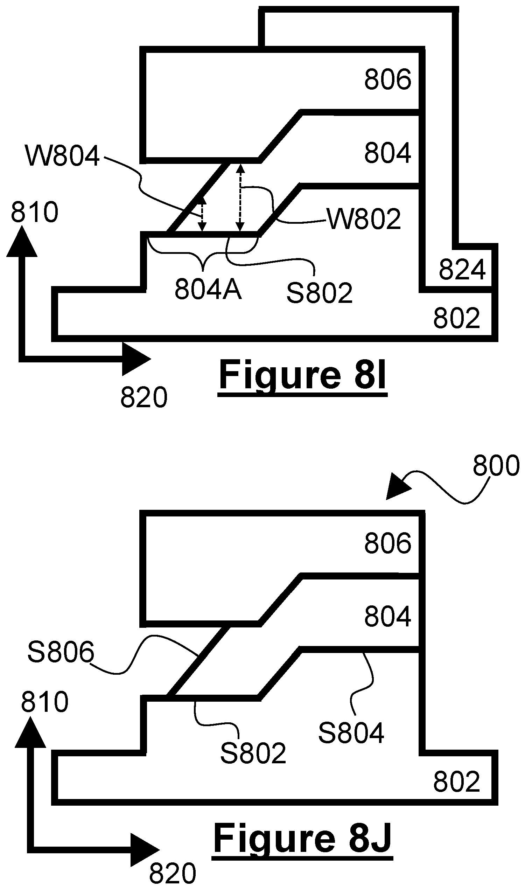

The method of manufacturing a light polarisation converter comprises at least partly forming a precursor P802 to a first layer 802 comprising a precursor PS802 to a first surface S802 (see Figures 8I and 8J) and a precursor PS804 to the second surface S804 (see Figure 8J). The precursor to the second surface is offset from the precursor to the first surface along a first axis 810 and a second axis 820, the first axis perpendicular to the precursor to the first surface, and the second axis parallel to the precursor to the first surface. At least partly forming the precursor to the first surface PS802 and the precursor to the second surface PS804, for example, comprises at least partly forming an etch mask 822 on the precursor to the first layer (e.g. on the precursor to the second surface PS804, Figure 8A); at least partly etching the precursor P802 to the first layer to achieve the described offsets (figure 8B); and removing the etch mask (Figure 8C). Instead of etching, lithography or grinding may be used.

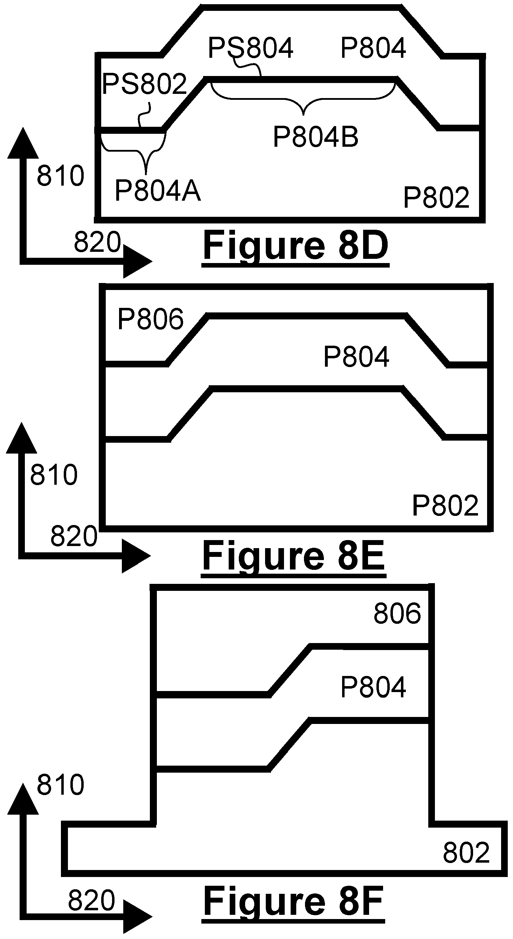

Referring to Figure 8D, the method comprises at least partly forming the waveguide 804 using a precursor P804 to the waveguide. The precursor P804 to the waveguide is formed on and in contact with the precursor P802 to the first layer. The precursor P804 to the waveguide has a precursor P804A to the first waveguide portion in contact with the precursor PS802 to the first surface, and a precursor P804B to the second waveguide portion in contact with the precursor PS804 to the second surface. As shown in Figure 8E a precursor P806 to the second layer is at least partly formed on and in contact with the precursor P804 to the waveguide, with the precursor P804 to the waveguide between the precursor P802 to the first layer and the precursor P806 to the second layer. See now Figure 8F which shows, compared with Figure 8E, removing some of at least one of: the precursor P802 to the first layer, the precursor P804 to the waveguide, or the precursor P806 to the second layer to form the first layer 802 and the second layer 806. In these examples some of each of these precursors is removed from one side (for example the right hand side as shown in the figures), e.g. using a downward etch process.

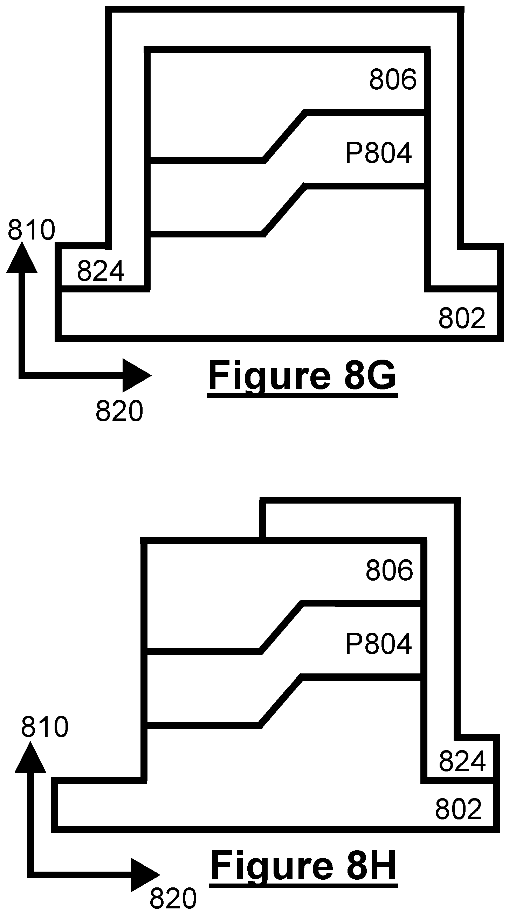

Figure 8G shows at least partly forming a protective layer 824 on at least part of at least one of the first layer 802, the precursor P804 to the waveguide or the second layer 806. Some of the protective layer is removed to partly expose the layers covered by the protective layer, for example to expose a side of the precursor P804 to the waveguide (see Figure 8H - the protective layer is removed from the left hand side of the covered layers, as illustrated).

To at least partly form the waveguide 804 from the precursor P804 to the waveguide, a portion of the precursor P804 to the waveguide is then removed from the exposed side, to form the waveguide 804 with a sloped third surface. See Figure 8I. The remaining protective layer therefore protects the non-exposed layers (e.g. the other side of the precursor of the waveguide) from any process which would otherwise remove or damage the covered layer(s) such as the waveguide material. As explained before, the formed waveguide 804 has a first thickness W802 of the first waveguide portion 804A different to a second thickness W804 of the first waveguide portion, the first thickness W802 and the second thickness W804 perpendicular to the first surface S802.

The remainder of the protective layer 824 is then removed to yield the polarisation converter, though in other examples any remaining protective layer 824 may be left in place for the completed polarisation converter..

Removing at least part of one or more of the precursors described above, and removing the protective layer, may be by known techniques such as etching or lithography. In removing a portion of the precursor of the waveguide, a technique selective for a particular crystal plane may be used to obtain the desired angle $\alpha$ between the third surface and the first surface. Such a technique is for example etching using an etchant comprising at least one of HCl, $H_3PO_4$, $H_2SO_4$, $H_2O_2$, or $H_2O$, or a mixture of such. Other etchants are envisaged. Where an etch mask or the protective layer comprises a masking material, this is for example a dielectric or a silicon mask such as a silicon nitride. In some examples, the angle $\alpha$ is chosen by setting the orientation of the crystalline structure of the waveguide with respect to at least one of the first axis, the second axis or the LPA. In some examples, the angle $\alpha$ is chosen by utilising gravitational effects, e.g. by setting the orientation of the waveguide with respect to the LPA for the etching step of fabrication of the polarisation converter (see the step of Figure 8H to 8I).

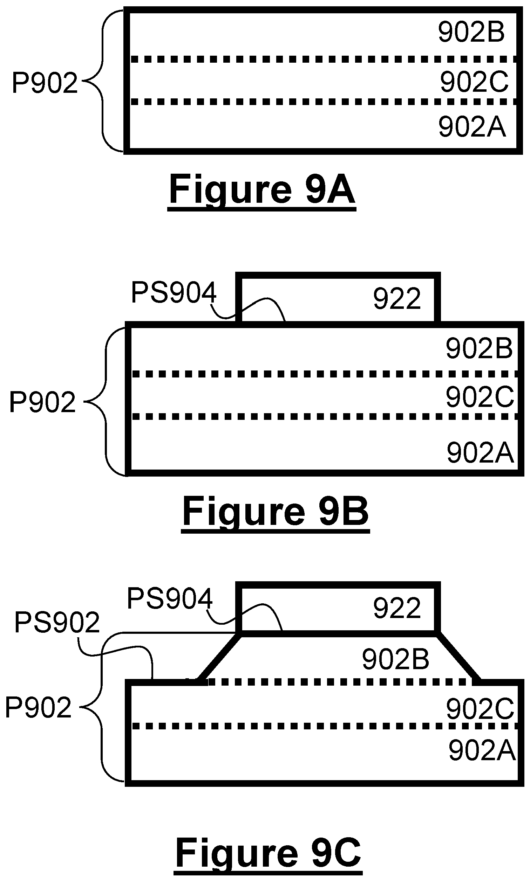

The method of Figures 8A to 8J may be modified to manufacture the light polarisation converter of, for example, Figure 3. Figures 9A to 9C are used to illustrate alternative methodology to that illustrated by Figures 8A to 8B, then a similar methodology to that illustrated with Figures 8C to 8J can be used. Where a feature of a light polarisation converter in relation to any of Figures 9A to 9C corresponds with a feature described using Figure 3, a reference numeral is used which is 600 greater than the corresponding reference numeral used for Figure 3 (e.g. 302 in Figure 3 is 902 in any of Figures 9A to 9C); corresponding descriptions for such features apply here also.

In Figure 9A a precursor P902 to the first layer is formed. The precursor P902 to the first layer 902 comprises a first portion 902A, a second portion 902B, and a third portion 902C. Each such portion is a sub-layer. The first portion 902A of the first layer comprises, e.g. is of, a material different to the second portion 902B of the first layer 902. The third portion 902C of the first layer is between and in contact with the first portion 902A and the second portion of the first layer 902. The third portion 902C of the first layer comprises, e.g. is of, a different material to at least one of the first portion 902A or the second portion 902B of the first layer. Then an etch mask 922 is at least partly formed on the precursor P902 to the first layer (e.g. on the precursor PS904 to the second surface which is an upper surface of the second portion 902B), as shown in Figure 9B. Then, as shown by Figure 9C, some of the second portion 902B of the first layer 902 which is not covered by the mask is removed to modify the precursor P902 to the first layer, e.g. by etching. In this way the extent of offsets between the first and second surfaces of the waveguide can be determined.

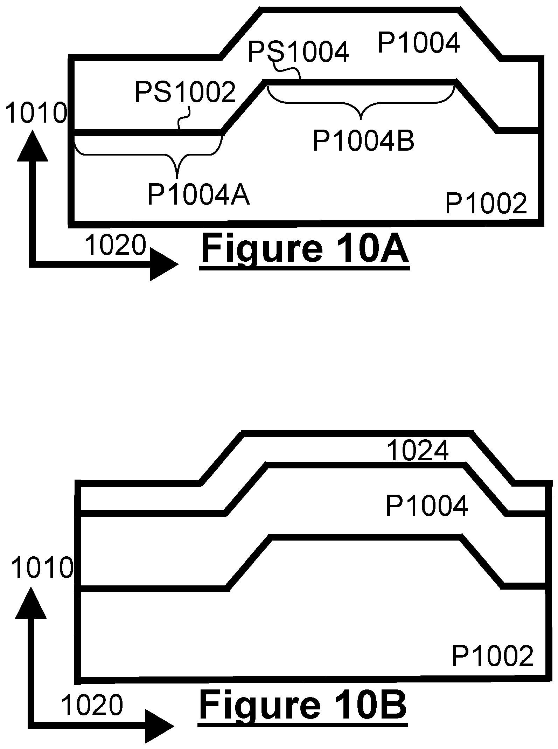

Figures 10A to 10F relate to further examples of a method of manufacturing a light polarisation converter of examples described herein. Figures 10A to 10F each illustrate schematically a side cross-section of a light polarisation converter at subsequent stages during manufacture. Features in common with those described for Figures 8A to 8J are not re-described here for conciseness; such features are referred to with a reference numeral which is 200 greater than the corresponding reference numeral used for Figures 8A to 8J (e.g. 802 in Figure 8J is 1002 in any of Figures 10A to 10F); corresponding descriptions for such features apply here also.

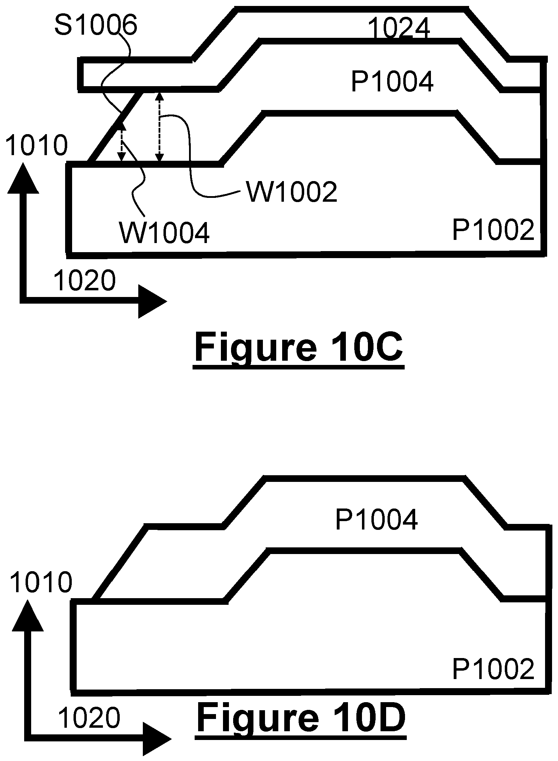

Figure 10A corresponds with part of the method described earlier by Figure 8D. Therefore, to arrive at the structure shown by Figure 10A, a similar method to that described earlier using Figures 8A to 8C may be used. Subsequent processing of the structure of Figure 10A will now be described. In these examples, the sloped third surface of the waveguide is formed before the second layer, compared with the examples of Figures 8A to 8C where the second layer is formed before the sloped third surface. This approach aids inspection of the third surface during manufacture, as shown by Figure 10D (once the protective layer 1024 is removed), to check that the angle of the slope of the third surface is as required.

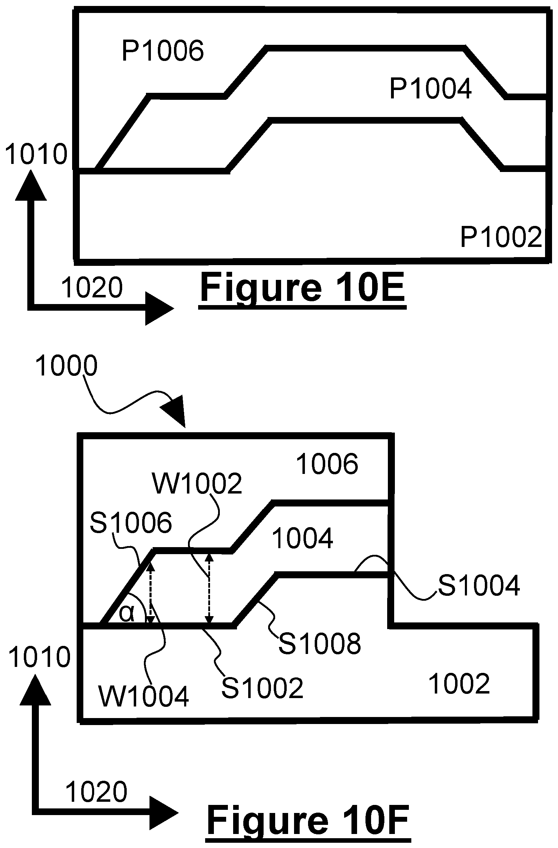

Starting with the structure shown by Figure 10A, and as shown by Figure 10B, a protective layer 1024 is formed on the precursor P1004 to the waveguide, thus covering an upper surface of the precursor P1004 to the waveguide. The protective layer is for example at least one of a dielectric or an etch mask. As shown by Figure 10C, and similar to the method described above with Figure 8I, a portion of the precursor to the waveguide is removed thus forming the first waveguide portion with the first thickness W1002 and the second thickness W1004, and hence the sloped third surface S1006. The protective layer is then at least partly removed as shown in Figure 10D, to expose at least part of the precursor P1004 to the waveguide. As Figure 10E shows, a precursor P1006 to the second layer is formed on, in contact with, and covering the precursor P1004 to the waveguide. Portions of the precursors to each of the first layer, the waveguide and the second layer are then removed (e.g. using a masking and downward etching process) to form the first layer 1002, the second layer 1006 and the waveguide 1004 of the desired light polarisation converter (see Figure 10F which shows portions removed on the right hand side of the precursors).

As the skilled person will appreciate, various techniques may be used to form, deposit, provide or remove portions or layers described here, e.g. using techniques such as: metalorganic vapour-phase epitaxy (MOVPE), surface passivation, photolithography, ion implantation, etching, dry etching, ion etching, wet etching, buffered oxide etching, plasma ashing, thermal treatment, annealing, thermal oxidation, chemical vapor deposition, atomic layer deposition, physical vapor deposition, molecular beam epitaxy (MBE), laser lift-off, electrochemical deposition, electroplating, or chemical-mechanical polishing. In some examples etching techniques are used to remove some not all of a layer, as the skilled person will appreciate.

Note too that the order of individual processing stages of methods described herein is not limiting, and further methods are envisaged within the skilled person's understanding with processing done in a different order than described.

The above examples are to be understood as illustrative examples. Further examples are envisaged, such as a polarisation converter as described previously, also with a first thickness of the second waveguide portion different to a second thickness of the second waveguide portion. Thus, the first thickness of the second waveguide portion is greater than the second thickness of the second waveguide portion. The first thickness of the second waveguide portion and the second thickness of the second waveguide portion are parallel to each other, and are perpendicular to the second surface and perpendicular the LPA. Each such thickness can be considered a height. Similarly to as described for the first waveguide portion earlier, the second waveguide portion can be considered to be tapered, with the different thicknesses. As a result of the taper, a further surface of the waveguide can be considered to tilt or slope, for example by an internal (relative to the waveguide) angle $\beta$ (not shown) taken relative to the second surface of the waveguide S 104. Hence with the further surface being angled in this way, differently from the second surface, the further surface is for example non-parallel to the first and second surface. With the further surface angled in this way, the further surface is for example at least partly recessed from a second plane substantially coplanar (e.g. in the same plane within acceptable tolerances) with a surface of the first layer and a surface of the second layer. The second plane is for example perpendicular to the second axis and corresponds with a side of the polarisation converter. A distance by which the further surface of the waveguide is recessed from the second plane is perpendicular to the thickness, and may depend on a duration of removing waveguide material, e.g. by a so-called under-etching process. Such a polarisation converter with two regions of waveguide material absent from between the first and second layers can give further design freedom, and potentially increase the efficiency of polarisation conversion. Indeed, the angles $\alpha$ and $\beta$ may be the same or different from each other (e.g. in correspondence with different crystalline planes).

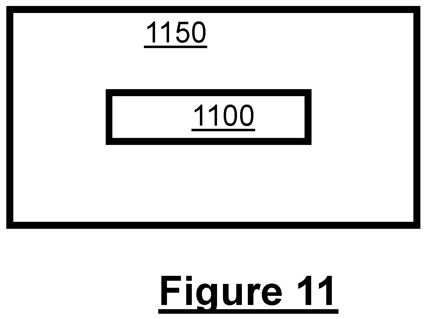

Further, Figure 11 illustrates schematically a plan view of a PIC 1150 comprising a light polarisation converter 1100 in accordance with examples described herein. A commercially utilised material platform for PICs is indium phosphide (InP), which allows for integration of optically active and passive functions on the same chip; however, other material platforms such as silicon (Si), Gallium Arsenide (GaAs) or lithium niobite (LiNBO3), may be utilised as a platform for PICs. A PIC may comprise hundreds of components integrated in a single chip.

Note that a layer referred to herein is for example a single layer of the same homogenous material, though it is envisaged for other examples that a layer instead comprises one or more sub-layers or portions each deposited or formed independently of each other (e.g. one after another during a manufacture process to form a stack of sub-layers which together could be considered a layer). A layer may have sub-portions of different materials, for example, for fabrication. Sub-portions of a layer may have different dopant concentrations. At least one of the first layer, the waveguide or the second layer, or a sub-layer thereof, each comprise InP. In some such examples, the first layer and the second layer each comprise InP, and the waveguide comprises InGaAsP. In other examples, at least one of the layers or the waveguide, described herein, comprise at least one of indium phosphide (InP), gallium arsenide (GaAs), gallium antimonide (GaSb), gallium nitride (GaN), indium gallium arsenide (InGaAs), indium aluminium arsenide (InAlAs), indium aluminium gallium arsenide (InAlGaAs), indium gallium arsenide phosphide (InGaAsP), silicon (Si), silicon nitride (Si3N4), silicon oxide (SiO2), or lithium niobate (LiNbO3); however, other semiconductor, and/or photonic materials are envisaged in further examples.

It is to be understood that any feature described in relation to any one example may be used alone, or in combination with other features described, and may also be used in combination with one or more features of any other of the examples, or any combination of any other of the examples. Furthermore, modifications not described above may also be employed without departing from the scope of the accompanying claims.

## Claims

1.   A light polarisation converter (100, 200, 300) for a photonic integrated circuit, comprising:

   a first layer (102, 202, 302) comprising a first surface (S102, S202, S302) and a second surface (S104, S204, S304), the second surface offset from the first surface along a first axis (110, 210, 310) and a second axis (120, 220, 320), the first axis perpendicular to the first surface, and the second axis parallel to the first surface;
   a second layer (106, 206, 306); and
   a waveguide (104, 204, 304) between, and in contact with each of, the first layer and the second layer, the waveguide comprising:

      a first waveguide portion (104A, 204A, 304A) in contact with the first surface, the first waveguide portion having a first thickness different to a second thickness of the first waveguide portion, the first thickness and the second thickness perpendicular the first surface, and
      a second waveguide portion (104B, 204B, 304B) in contact with the second surface, such that the second waveguide portion is offset from the first waveguide portion,

      **characterised in that** the light polarisation converter comprises a region (211) between the first layer and the second layer, the refractive index of the region different from the refractive index of the waveguide, the waveguide absent from the region, and the waveguide comprises a third surface (S106, S206), the third surface not in contact with the first layer or the second layer.

2.   The light polarisation converter of claim 1, the first surface angled relative to the third surface by an internal angle of 30 to 65 degrees, 30 to 40 degrees, 50 to 65 degrees, 50 to 55 degrees, 55 to 60 degrees or 60 to 65 degrees.

3.   The light polarisation converter of claim 1 or claim 2, wherein the waveguide comprises a crystalline material and the third surface is angled in correspondence with a crystalline plane of the crystalline material, optionally wherein the crystalline plane is the {0-11}, {111} or {112} plane.

4.   The light polarisation converter of any of claims 1 to 3, wherein a side of the first layer and a side of the second layer are coplanar in a first plane, the third surface at least partly offset from the first plane.

5. The light polarisation converter of any previous claim, wherein the waveguide comprises a fourth surface (S108, S208, S308) between the first surface and the second surface, the fourth surface not parallel to the first surface, optionally wherein the fourth surface is perpendicular to the first surface.

6. The light polarisation converter of any previous claim, wherein a first portion (302A) of the first layer comprises the first surface, and a second portion (302B) of the first layer comprises the second surface, the first portion of the first layer comprising a different material to the second portion of the first layer.

7. The light polarisation converter of claim 6, comprising a third portion (302C) of the first layer between the first portion of the first layer and the second portion of the first layer, such that the first portion of the first layer is in contact with the third portion of the first layer and the third portion of the first layer is in contact with the second portion of the first layer, the third portion of the first layer comprising a different material to at least one of the first portion of the first layer or the second portion of the first layer.

8. The light polarisation converter of any previous claim, comprising a third layer (308) on and in contact with the second layer; and/or

   wherein the first layer and the second layer each comprise indium phosphide, and the waveguide comprises indium gallium arsenide phosphide; and/or
   wherein a length of the waveguide parallel to a light propagation axis is substantially equal to an odd integer multiplied by a quarter of a beat length for a wavelength of the input light.

9. A photonic integrated circuit comprising the light polarisation converter of any previous claim.

10. A method of manufacturing a light polarisation converter (100, 200, 300) comprising:

    at least partly forming a first layer (102, 202, 302) using a precursor to the first layer, the first layer comprising a first surface (S102, S202, S302) and a second surface (S104, S204, S304), the second surface offset from the first surface along a first axis (110, 210, 310) and a second axis (120, 220, 320), the first axis perpendicular to the first surface, and the second axis parallel to the first surface;
    at least partly forming a waveguide (104, 204, 304) using a precursor to the waveguide, the waveguide on and in contact with the first layer, the waveguide comprising: a first waveguide portion (104A, 204A, 304A) in contact with the first surface, and a second waveguide portion (104B, 204B, 304B) in contact with the second surface, a first thickness of the first waveguide portion different to a second thickness of the first waveguide portion, the first thickness and the second thickness perpendicular to the first surface; and
    at least partly forming a second layer (106, 206, 306), using a precursor to the second layer, the second layer on and in contact with the waveguide, the waveguide between the first layer and the second layer,
    **characterised in that** the method comprises forming a region (211) between the first layer and the second layer, the refractive index of the region different from the refractive index of the waveguide, the waveguide absent from the region, and the waveguide comprises a third surface (S106, S206), the third surface not in contact with the first layer or the second layer.

11. The method of manufacturing of claim 10, comprising: removing at least part of at least one of: the precursor to the first layer, the precursor to the waveguide or the precursor to the second layer.

12. The method of manufacturing of claim 10 or claim 11, comprising:

    forming a protective layer (824, 1024) on at least one of: the first layer, the waveguide; the second layer, the precursor to the first layer, the precursor to the waveguide; or the precursor to the second layer; and
    removing some of the protective layer to at least partly expose a side of the precursor to the waveguide; optionally comprising removing remaining of the protective layer after forming the waveguide.

13. The method of manufacturing of any of claims 10 to 12, wherein at least partly forming the waveguide comprises at least one of removing a portion of the precursor to the waveguide, lithography of the precursor to the waveguide or etching of the precursor to the waveguide.

14. The method of manufacturing of any of claims 10 to 13, wherein the first surface is angled at least one of:

relative to the third surface by an internal angle of 30 to 65 degrees, 30 to 40 degrees, 50 to 65 degrees, 50 to 55 degrees, 55 to 60 degrees or 60 to 65 degrees; or
in correspondence with a crystalline plane of the crystalline material.

15. The method of manufacturing of any of claims 10 to 14, wherein

(i) at least one of:

removing at least part of at least one of: the precursor to the first layer, the precursor to the waveguide or the precursor to the second layer; or
removing the protective layer;
comprises at least one of: etching, or lithography; and/or

(ii) wherein at least partly forming the first layer comprises removing a portion of the precursor to the first layer, optionally wherein removing the portion of the precursor to the first layer comprises:

at least partly forming an etch mask on the precursor to the first layer;
at least partly etching the portion of the precursor to the first layer; and
at least partly removing the etch mask; and/or

(iii) wherein removing at least part of at least one of: the precursor to the first layer, the precursor to the waveguide or the precursor to the second layer, comprises removing at least part of: the precursor to the first layer, the precursor to the waveguide, and the precursor to the second layer.

## Patentansprüche

1. Lichtpolarisationswandler (100, 200, 300) für eine photonische integrierte Schaltung, umfassend:

eine erste Schicht (102, 202, 302), die eine erste Oberfläche (S102, S202, S302) und eine zweite Oberfläche (S104, S204, S304) umfasst, wobei die zweite Oberfläche von der ersten Oberfläche entlang einer ersten Achse (110, 210, 310) und einer zweiten Achse (120, 220, 320) versetzt ist, wobei die erste Achse senkrecht zu der ersten Oberfläche verläuft und die zweite Achse parallel zu der ersten Oberfläche verläuft;
eine zweite Schicht (106, 206, 306); und
einen Wellenleiter (104, 204, 304) zwischen der ersten und der zweiten Schicht und in Kontakt mit diesen, wobei der Wellenleiter umfasst:

einen ersten Wellenleiterabschnitt (104A, 204A, 304A) in Kontakt mit der ersten Oberfläche, wobei der erste Wellenleiterabschnitt eine erste Dicke aufweist, die sich von einer zweiten Dicke des ersten Wellenleiterabschnitts unterscheidet, wobei die erste Dicke und die zweite Dicke senkrecht zu der ersten Oberfläche verlaufen, und
einen zweiten Wellenleiterabschnitt (104B, 204B, 304B) in Kontakt mit der zweiten Oberfläche, sodass der zweite Wellenleiterabschnitt von dem ersten Wellenleiterabschnitt versetzt ist,
**dadurch gekennzeichnet, dass** der Lichtpolarisationswandler einen Bereich (211) zwischen der ersten Schicht und der zweiten Schicht umfasst, wobei sich der Brechungsindex dieses Bereichs von dem Brechungsindex des Wellenleiters unterscheidet, der Wellenleiter in diesem Bereich fehlt und der Wellenleiter eine dritte Oberfläche (S106, S206) umfasst, wobei die dritte Oberfläche nicht in Kontakt mit der ersten Schicht oder der zweiten Schicht steht.

2. Lichtpolarisationswandler nach Anspruch 1, wobei die erste Oberfläche relativ zu der dritten Oberfläche um einen Innenwinkel von 30 bis 65 Grad, 30 bis 40 Grad, 50 bis 65 Grad, 50 bis 55 Grad, 55 bis 60 Grad oder 60 bis 65 Grad abgewinkelt ist.

3. Lichtpolarisationswandler nach Anspruch 1 oder Anspruch 2, wobei der Wellenleiter ein kristallines Material umfasst und die dritte Oberfläche entsprechend einer kristallinen Ebene des kristallinen Materials abgewinkelt ist, wobei die kristalline Ebene optional die Ebene {0-11}, {111} oder {112} ist.

4. Lichtpolarisationswandler nach einem der Ansprüche 1 bis 3, wobei eine Seite der ersten Schicht und eine Seite der zweiten Schicht in einer ersten Ebene koplanar sind und die dritte Oberfläche mindestens partiell von der ersten Ebene versetzt ist.

5. Lichtpolarisationswandler nach einem der vorstehenden Ansprüche, wobei der Wellenleiter eine vierte Oberfläche (S108, S208, S308) zwischen der ersten Oberfläche und der zweiten Oberfläche umfasst, wobei die vierte Oberfläche nicht parallel zur ersten Oberfläche verläuft und wobei die vierte Oberfläche optional senkrecht zu der ersten Oberfläche verläuft.

6. Lichtpolarisationswandler nach einem der vorstehenden Ansprüche, wobei ein erster Abschnitt (302A) der ersten Schicht die erste Oberfläche umfasst und ein zweiter Abschnitt (302B) der ersten Schicht die zweite Oberfläche umfasst, wobei der erste Abschnitt der ersten Schicht ein anderes Material als der zweite Abschnitt der ersten Schicht umfasst.

7. Lichtpolarisationswandler nach Anspruch 6, der einen dritten Abschnitt (302C) der ersten Schicht zwischen dem ersten Abschnitt der ersten Schicht und dem zweiten Abschnitt der ersten Schicht umfasst, sodass der erste Abschnitt der ersten Schicht in Kontakt mit dem dritten Abschnitt der ersten Schicht steht und der dritte Abschnitt der ersten Schicht in Kontakt mit dem zweiten Abschnitt der ersten Schicht steht, wobei der dritte Abschnitt der ersten Schicht ein anderes Material als mindestens der erste Abschnitt der ersten Schicht oder der zweite Abschnitt der ersten Schicht umfasst.

8. Lichtpolarisationswandler nach einem der vorstehenden Ansprüche, der eine dritte Schicht (308) auf und in Kontakt mit der zweiten Schicht umfasst; und/oder

   wobei die erste Schicht und die zweite Schicht jeweils Indiumphosphid umfassen und der Wellenleiter Indium-Galliumarsenid-Phosphid umfasst; und/oder
   wobei eine Länge des Wellenleiters parallel zu einer Lichtausbreitungsachse im Wesentlichen gleich einer ungeraden Ganzzahl, multipliziert mit einem Viertel einer Schwebungslänge für eine Wellenlänge des Eingangslichts ist.

9. Photonische integrierte Schaltung, die den Lichtpolarisationswandler nach einem der vorstehenden Ansprüche umfasst.

10. Verfahren zum Herstellen eines Lichtpolarisationswandlers (100, 200, 300), umfassend:

    mindestens partielles Bilden einer ersten Schicht (102, 202, 302) unter Verwendung eines Vorläufers der ersten Schicht, wobei die erste Schicht eine erste Oberfläche (S102, S202, S302) und eine zweite Oberfläche (S104, S204, S304) umfasst, wobei die zweite Oberfläche von der ersten Oberfläche entlang einer ersten Achse (110, 210, 310) und einer zweiten Achse (120, 220, 320) versetzt ist, wobei die erste Achse senkrecht zu der ersten Oberfläche verläuft und die zweite Achse parallel zu der ersten Oberfläche verläuft;
    mindestens partielles Bilden eines Wellenleiters (104, 204, 304) unter Verwendung eines Vorläufers des Wellenleiters, wobei sich der Wellenleiter auf und in Kontakt mit der ersten Schicht befindet, wobei der Wellenleiter umfasst: einen ersten Wellenleiterabschnitt (104A, 204A, 304A) in Kontakt mit der ersten Oberfläche und einen zweiten Wellenleiterabschnitt (104B, 204B, 304B) in Kontakt mit der zweiten Oberfläche, wobei sich eine erste Dicke des ersten Wellenleiterabschnitts von einer zweiten Dicke des ersten Wellenleiterabschnitts unterscheidet und die erste Dicke und die zweite Dicke senkrecht zu der ersten Oberfläche verlaufen; und
    mindestens partielles Bilden einer zweiten Schicht (106, 206, 306) unter Verwendung eines Vorläufers der zweiten Schicht, wobei sich die zweite Schicht auf dem Wellenleiter befindet und mit diesem in Kontakt steht, wobei sich der Wellenleiter zwischen der ersten Schicht und der zweiten Schicht befindet,
    **dadurch gekennzeichnet, dass** das Verfahren das Bilden eines Bereichs (211) zwischen der ersten Schicht und der zweiten Schicht umfasst, wobei sich der Brechungsindex dieses Bereichs von dem Brechungsindex des Wellenleiters unterscheidet, der Wellenleiter in diesem Bereich fehlt und der Wellenleiter eine dritte Oberfläche (S106, S206) umfasst, wobei die dritte Oberfläche nicht in Kontakt mit der ersten Schicht oder der zweiten Schicht steht.

11. Verfahren zum Herstellen nach Anspruch 10, umfassend: Entfernen mindestens eines Teils von mindestens einem aus: dem Vorläufer der ersten Schicht, dem Vorläufer des Wellenleiters oder dem Vorläufer der zweiten Schicht.

12. Verfahren zum Herstellen nach einem der Ansprüche 10 oder 11, umfassend:

Bilden einer Schutzschicht (824, 1024) auf mindestens einem aus: der ersten Schicht, dem Wellenleiter; der zweiten Schicht, dem Vorläufer der ersten Schicht, dem Vorläufer des Wellenleiters; oder dem Vorläufer der zweiten Schicht; und
Entfernen eines Teils der Schutzschicht, um eine Seite des Vorläufers mindestens partiell dem Wellenleiter gegenüber freizulegen; optional umfassend das Entfernen des Rests der Schutzschicht nach dem Bilden des Wellenleiters.

13. Verfahren zum Herstellen nach einem der Ansprüche 10 bis 12, wobei das mindestens partielle Bilden des Wellenleiters mindestens eines umfasst aus Entfernen eines Abschnitts des Vorläufers des Wellenleiters, Lithographie des Vorläufers des Wellenleiters oder Ätzen des Vorläufers des Wellenleiters.

14. Verfahren zum Herstellen nach einem der Ansprüche 10 bis 13, wobei die erste Oberfläche auf mindestens eine der folgenden Weisen abgewinkelt ist:

relativ zu der dritten Oberfläche um einen Innenwinkel von 30 bis 65 Grad, 30 bis 40 Grad, 50 bis 65 Grad, 50 bis 55 Grad, 55 bis 60 Grad oder 60 bis 65 Grad; oder
in Übereinstimmung mit einer kristallinen Ebene des kristallinen Materials.

15. Verfahren zum Herstellen nach einem der Ansprüche 10 bis 14, wobei (i) mindestens eines aus:

Entfernen mindestens eines Teils von mindestens einem aus: dem Vorläufer der ersten Schicht, dem Vorläufer des Wellenleiters oder dem Vorläufer der zweiten Schicht; oder
Entfernen der Schutzschicht;
mindestens eines umfasst aus: Ätzen oder Lithographie; und/oder

(ii) wobei das mindestens partielle Bilden der ersten Schicht das Entfernen eines Abschnitts des Vorläufers der ersten Schicht umfasst, wobei das Entfernen des Abschnitts des Vorläufers der ersten Schicht optional umfasst:

mindestens partielles Bilden einer Ätzmaske auf dem Vorläufer der ersten Schicht;
mindestens partielles Ätzen des Abschnitts des Vorläufers der ersten Schicht; und
mindestens partielles Entfernen der Ätzmaske; und/oder

(iii) wobei das Entfernen mindestens eines Teils von mindestens einem aus:
dem Vorläufer der ersten Schicht, dem Vorläufer des Wellenleiters oder dem Vorläufer der zweiten Schicht
das Entfernen mindestens eines Teils des Vorläufers der ersten Schicht, des Vorläufers des Wellenleiters und des Vorläufers der zweiten Schicht umfasst.

**Revendications**

1. Convertisseur de polarisation de lumière (100, 200, 300) pour un circuit intégré photonique, comprenant :

une première couche (102, 202, 302) comprenant une première surface (S102, S202, S302) et une deuxième surface (S104, S204, S304), la deuxième surface étant décalée par rapport à la première surface le long d'un premier axe (110, 210, 310) et d'un second axe (120, 220, 320), le premier axe étant perpendiculaire à la première surface, et le second axe étant parallèle à la première surface ;
une deuxième couche (106, 206, 306) ; et
un guide d'ondes (104, 204, 304) entre la première couche et la deuxième couche et en contact avec chacune d'elles, le guide d'ondes comprenant :

une première partie de guide d'ondes (104A, 204A, 304A) en contact avec la première surface, la première partie de guide d'ondes ayant une première épaisseur différente d'une seconde épaisseur de la première partie de guide d'ondes, la première épaisseur et la seconde épaisseur étant perpendiculaires à la première surface, et
une deuxième partie de guide d'ondes (104B, 204B, 304B) en contact avec la deuxième surface, de telle sorte que la deuxième partie de guide d'ondes est décalée par rapport à la première partie de guide d'ondes, **caractérisé en ce que** le convertisseur de polarisation de lumière comprend une région (211) entre la première couche et la deuxième couche, l'indice de réfraction de la région étant différent de l'indice de réfraction du guide d'ondes, le guide d'ondes étant absent de la région, et le guide d'ondes comprend une troisième surface (S106, S206), la troisième surface n'étant pas en contact avec la première couche ou la deuxième couche.

2. Convertisseur de polarisation de lumière selon la revendication 1, la première surface étant inclinée par rapport à la troisième surface selon un angle interne de 30 à 65 degrés, de 30 à 40 degrés, de 50 à 65 degrés, de 50 à 55 degrés, de 55 à 60 degrés ou de 60 à 65 degrés.

3. Convertisseur de polarisation de lumière selon la revendication 1 ou la revendication 2, dans lequel le guide d'ondes comprend un matériau cristallin et la troisième surface est inclinée en correspondance avec un plan cristallin du matériau cristallin, éventuellement dans lequel le plan cristallin est le plan {0-11}, {111} ou {112}.

4. Convertisseur de polarisation de lumière selon l'une quelconque des revendications 1 à 3, dans lequel un côté de la première couche et un côté de la deuxième couche sont coplanaires dans un premier plan, la troisième surface étant au moins partiellement décalée par rapport au premier plan.

5. Convertisseur de polarisation de lumière selon l'une quelconque revendication précédente, dans lequel le guide d'ondes comprend une quatrième surface (S108, S208, S308) entre la première surface et la deuxième surface, la quatrième surface n'étant pas parallèle à la première surface, éventuellement dans lequel la quatrième surface est perpendiculaire à la première surface.

6. Convertisseur de polarisation de lumière selon l'une quelconque revendication précédente, dans lequel une première partie (302A) de la première couche comprend la première surface, et une deuxième partie (302B) de la première couche comprend la deuxième surface, la première partie de la première couche comprenant un matériau différent de la deuxième partie de la première couche.

7. Convertisseur de polarisation de lumière selon la revendication 6, comprenant une troisième partie (302C) de la première couche entre la première partie de la première couche et la deuxième partie de la première couche, de telle sorte que la première partie de la première couche est en contact avec la troisième partie de la première couche et la troisième partie de la première couche est en contact avec la deuxième partie de la première couche, la troisième partie de la première couche comprenant un matériau différent d'au moins l'une parmi la première partie de la première couche ou la deuxième partie de la première couche.

8. Convertisseur de polarisation de lumière selon l'une quelconque revendication précédente, comprenant une troisième couche (308) sur la deuxième couche et en contact avec celle-ci ; et/ou

dans lequel la première couche et la deuxième couche comprennent chacune du phosphure d'indium, et le guide d'ondes comprend de l'indium gallium arséniure phosphure ; et/ou
dans lequel une longueur du guide d'ondes parallèle à un axe de propagation de lumière est sensiblement égale à un nombre entier impair multiplié par un quart d'une longueur de battement pour une longueur d'onde de la lumière d'entrée.

9. Circuit intégré photonique comprenant le convertisseur de polarisation de lumière selon l'une quelconque revendication précédente.

10. Procédé de fabrication d'un convertisseur de polarisation de lumière (100, 200, 300) comprenant :

la formation au moins partielle d'une première couche (102, 202, 302) à l'aide d'un précurseur de la première couche, la première couche comprenant une première surface (S102, S202, S302) et une deuxième surface (S104, S204, S304), la deuxième surface étant décalée par rapport à la première surface le long d'un premier axe (110, 210, 310) et d'un second axe (120, 220, 320), le premier axe étant perpendiculaire à la première surface et le second axe étant parallèle à la première surface ;
la formation au moins partielle d'un guide d'ondes (104, 204, 304) à l'aide d'un précurseur du guide d'ondes, le guide d'ondes étant sur la première couche et en contact avec celle-ci, le guide d'ondes comprenant : une première partie de guide d'ondes (104A, 204A, 304A) en contact avec la première surface, et une deuxième partie de guide d'ondes (104B, 204B, 304B) en contact avec la deuxième surface, une première épaisseur de la première partie de guide d'ondes étant différente d'une seconde épaisseur de la première partie de guide d'ondes, la première épaisseur et la seconde épaisseur étant perpendiculaires à la première surface ; et

la formation au moins partielle d'une deuxième couche (106, 206, 306), à l'aide d'un précurseur de la deuxième couche, la deuxième couche étant sur le guide d'ondes et en contact avec celui-ci, le guide d'ondes étant entre la première couche et la deuxième couche,

**caractérisé en ce que** le procédé comprend la formation d'une région (211) entre la première couche et la deuxième couche, l'indice de réfraction de la région étant différent de l'indice de réfraction du guide d'ondes, le guide d'ondes étant absent de la région, et le guide d'ondes comprend une troisième surface (S106, S206), la troisième surface n'étant pas en contact avec la première couche ou la deuxième couche.

11. Procédé de fabrication selon la revendication 10, comprenant : le retrait d'au moins une partie d'au moins l'un parmi : le précurseur de la première couche, le précurseur du guide d'ondes ou le précurseur de la deuxième couche.

12. Procédé de fabrication selon la revendication 10 ou la revendication 11 comprenant :

la formation d'une couche de protection (824, 1024) sur au moins l'un parmi : la première couche, le guide d'ondes ; la deuxième couche, le précurseur de la première couche, le précurseur du guide d'ondes ; ou le précurseur de la deuxième couche ; et

le retrait d'une partie de la couche de protection pour exposer au moins partiellement un côté du précurseur du guide d'ondes ; éventuellement comprenant le retrait du reste de la couche de protection après la formation du guide d'ondes.

13. Procédé de fabrication selon l'une quelconque des revendications 10 à 12, dans lequel la formation au moins partielle du guide d'ondes comprend au moins l'un parmi le retrait d'une partie du précurseur du guide d'ondes, la lithographie du précurseur du guide d'ondes ou la gravure du précurseur du guide d'ondes.

14. Procédé de fabrication selon l'une quelconque des revendications 10 à 13, dans lequel la première surface est inclinée selon au moins l'un parmi :

par rapport à la troisième surface, un angle interne de 30 à 65 degrés, de 30 à 40 degrés, de 50 à 65 degrés, de 50 à 55 degrés, de 55 à 60 degrés ou de 60 à 65 degrés ; ou

en correspondance avec un plan cristallin du matériau cristallin.

15. Procédé de fabrication selon l'une quelconque des revendications 10 à 14, dans lequel (i) au moins l'un parmi :

le retrait d'au moins une partie d'au moins l'un parmi : le précurseur de la première couche, le précurseur du guide d'ondes ou le précurseur de la deuxième couche ; ou

le retrait de la couche de protection ;

comprend au moins l'un parmi : la gravure ou la lithographie ; et/ou

(ii) dans lequel la formation au moins partielle de la première couche comprend le retrait d'une partie du précurseur de la première couche, éventuellement dans lequel le retrait de la partie du précurseur de la première couche comprend :

la formation au moins partielle d'un masque de gravure sur le précurseur de la première couche ; la gravure au moins partielle de la partie du précurseur de la première couche ; et le retrait au moins partiel du masque de gravure ; et/ou

(iii) dans lequel le retrait d'au moins une partie d'au moins l'un parmi : le précurseur de la première couche, le précurseur du guide d'ondes ou le précurseur de la deuxième couche, comprend le retrait au moins en partie : du précurseur de la première couche, du précurseur du guide d'ondes et du précurseur de la deuxième couche.

**Figure 1**

**Figure 2**

**Figure 3**

408

404

406 402

LPA

410

**Figure 4A**

404

412 408

410 402

LPA

**Figure 4B**

500

506

510

504

L502

LPA

502

**Figure 5**

**Figure 6**

700

702

At least partly forming a first layer using a precursor to the first layer, the first layer comprising a first surface and a second surface, the second surface offset from the first surface along a first axis and a second axis, the first axis perpendicular to the first surface, and the second axis parallel to the first surface;

704

at least partly forming a waveguide using a precursor to the waveguide, the waveguide on and in contact with the first layer, the waveguide comprising: a first waveguide portion in contact with the first surface, and a second waveguide portion in contact with the second surface, a first thickness of the first waveguide portion different to a second thickness of the first waveguide portion, the first thickness and the second thickness perpendicular to the first surface;

706

at least partly forming a second layer, using a precursor to the second layer, the second layer on and in contact with the waveguide, the waveguide between the first layer and the second layer.

## Figure 7

**822**

**810**

**PS804**

**P802**

**820** **Figure 8A**

**822**

**810**

**PS804**

**PS802**

**P802**

**820**

**Figure 8B**

**PS804**

**810**

**PS802**

**P802**

**820** **Figure 8C**

**Figure 8D**

**Figure 8E**

**Figure 8F**

810

824

806

P804

802

820

**Figure 8G**

810

806

P804

824

802

820

**Figure 8H**

806

804

W804

810

W802

804A    S802

824

802

**Figure 8I**

820

800

806

804

S806

810

S802    S804

802

**Figure 8J**

820

P902 {

902B

902C

902A

**Figure 9A**

PS904

922

P902 {

902B

902C

902A

**Figure 9B**

PS904

PS902

922

902B

P902 {

902C

902A

**Figure 9C**

**Figure 10A**

**Figure 10B**

S1006

1024

P1004

1010

W1002

W1004

P1002

1020

## Figure 10C

P1004

1010

P1002

1020  ## Figure 10D

P1006

P1004

1010

P1002

1020

**Figure 10E**

1000

1006

W1002

S1006

1004

α

S1004

S1008

W1004

S1002

1002

1010

1020

**Figure 10F**

1150

1100

# Figure 11

**REFERENCES CITED IN THE DESCRIPTION**

**Patent documents cited in the description**

- JP H1078519 A